# EUROPEAN PATENT SPECIFICATION

(11) **EP 2 937 164 B1**
(45) Date of publication and mention of the grant of the patent: **03.05.2017**
(21) Application number: 12890576.7
(22) Date of filing: 20.12.2012
(51) Int. Cl.: B23B 39/00, B23B 41/02

(54) **BORE-MACHINING ATTACHMENT FOR MACHINE TOOL**
BOHRUNGSBEARBEITUNGSAUFSATZ FÜR WERKZEUGMASCHINE
ACCESSOIRE D'USINAGE D'ALÉSAGE POUR MACHINE-OUTIL

(43) Date of publication of application: 28.10.2015
(73) Proprietor: Yamazaki Mazak Corporation, Niwa-gun, Aichi 480-0197 (JP)
(72) Inventor: YAMAMOTO Tohru, Niwa-gun Aichi 480-0197 (JP); MANABE Yasushi, Niwa-gun Aichi 480-0197 (JP); KIZAWA Shingo, Niwa-gun Aichi 480-0197 (JP); SUZUURA Masakazu, Niwa-gun Aichi 480-0197 (JP)
(74) Representative: TBK
(86) International application number: PCT/JP2012/082986
(87) International publication number: WO 2014/097434

(56) References cited:
- EP-A1- 1 166 931
- EP-A1- 2 353 757
- EP-A2- 1 992 434
- WO-A1-2010/064478
- JP-A- 2004 066 430
- JP-U- S6 061 103
- US-A1- 2011 079 121

## Description

The present invention relates to a machine tool according to the preamble of claim 1. Such a machine tool is known from EP 2 353 757 A.

### Background Art

Conventional vertical lathes include a rotary table that turns about a vertical axis, and perform various processes such as boring, tapping, and milling on upper surface or side surface of a workpiece placed on the rotary table in addition to turning process. One example of such a lathe is a multitasking lathe including a spindle head pivotable about a horizontal axis (B-axis) disposed on a tool rest movable in a Z-axial direction. The spindle head has a highly rigid structure, and includes a spindle switchable between a rotatable mode and an un-rotatable locked mode. The spindle is switched to the un-rotatable locked mode to mount a turning tool to the spindle. Then, a turning process is performed on the outer portion, inner portion, end surface of the workpiece placed on the rotary table. When the spindle is switched to the rotatable mode, a milling tool, a drilling tool, or a tapping tool is mounted to the spindle to perform milling, drilling, or tapping. However, the spindle head having high rigidity and pivoting about the B-axis has an outer shape having a large dimension. Such a large spindle head produces interference between the workpiece and the spindle, causing various limitations on the process of inner portions of workpieces to be deeply bored. JP 2007-000966 A discloses a composite machine tool including a tool rest movable in the Z-axial direction and a ram shaft for an internal deep boring process disposed in the tool rest to be movable parallel to a Z-axis, wherein an inner portion of a workpiece placed on a rotary table is subjected to an internal turning process with a turning tool mounted to the ram shaft to be deeply bored.

However, in the turning process of the inner portion of the workpiece to be deeply bored, to provide as wide a range of machinable targets as possible, that is, to machine narrower inner portions of workpieces, the cross-sectional dimension of the ram shaft is reduced while rigidity is somehow sacrificed. Although the ram shaft may be designed to have a large cross-sectional dimension so as not to sacrifice rigidity, this design leads to significant limitation on the workpiece to be machined.

To solve these problems, another method is examined. In this method, instead of the ram shaft for an internal deep boring process, an internal turning attachment is mounted to the spindle head. This ensures a certain length of a portion projected from the spindle head without sacrificing rigidity.

However, even an attachment projected by such a certain length from the spindle head causes interference between the spindle head and the entrance of the hole of the workpiece if a portion to be bored is located at a depth deeper than the length of the attachment projected from the spindle head. The interference prevents the blade tip of the tool from reaching the portion to be bored, and prevents the process itself.

To avoid the interference, it is necessary to increase the length of the attachment projected from the spindle head or the length of a turning tool projected from the attachment.

However, all of these methods undesirably reduce the rigidity against cutting resistance.

US 2011/079121 A1 shows a generic machine tool. This machine tool comprises a table configured to turn about a vertical axis with a workpiece mounted on the table; a spindle head disposed above the table and pivotable about a B-axis, the B-axis is a horizontal axis; a spindle built in the spindle head and configured to rotate about an axis of a tool detachably mounted to the spindle; and an internal turning attachment detachably mounted to the spindle head with a dedicated clamp mechanism, wherein the internal turning attachment comprises an attachment base having a portion to be mounted to the spindle head, a body fixed to a lower portion of the attachment base, and a tool holder to be mounted to a lower portion of the body, wherein the tool holder has a tool mount surface to which a turning tool is detachably mounted, wherein a tool mount angle is an angle between the tool mount surface and a plane perpendicular to an axis of the spindle in case the internal turning attachment is mounted to the spindle head.

A further machine tool according to the prior art is shown in EP 1 992 434 A2.

### Summary of the Invention

It is the object of the present invention to further develop a generic machine tool according to the preamble of claim 1 such that operability and degrees of freedom of the machine tool are improved.

The object of the present invention is achieved by a machine tool having the features of claim 1.

Further advantageous developments according to the present invention are defined in the dependent claims.

It is an advantage of the present invention to provide an internal turning attachment that is mountable to a spindle head in a composite machine tool having control of a B-axis and that can bore a deeper hole in an inner portion of a workpiece located at a depth deeper than the length of the attachment projected from the spindle head.

According to the present invention, a machine tool includes a table, a spindle head, a spindle, and an internal turning attachment. The table is configured to turn about a vertical axis with a workpiece mounted on the table. The spindle head is disposed above the table and pivotable about a B-axis. The B-axis is a horizontal axis. The spindle is built in the spindle head and configured to rotate about an axis of a tool detachably mounted to the spindle. The internal turning attachment is detachably mounted to the spindle head with a dedicated clamp mechanism.

The internal turning attachment includes an attachment base, a body, and a tool holder. The attachment base has a portion to be mounted to the spindle head. The body is fixed to a lower portion of the attachment base. The tool holder is to be mounted to a lower portion of the body. The tool holder has a tool mount surface to which a turning tool is detachably mounted. A tool mount angle (*β₂*) is changeable. The tool mount angle (*β2*) is an angle between the tool mount surface and a plane perpendicular to an axis of the spindle when the internal turning attachment is mounted. When a workpiece has a hole with a depth deeper than a length of the internal turning attachment projected from the spindle head, the machine tool is configured to change the tool mount angle (*β2*) larger than zero degree so as to change an angle of the spindle head about the B-axis to other than zero degree, and configured to machine the workpiece at the changed tool mount angle (*β₂*), and the changed tool mount angle (*β2*) is fixed while the turning tool is in contact with the workpiece.

The tool holder may include a plurality of tool holders mounted at different tool mount angles. The tool holder may be replaced with another tool holder among the plurality of tool holders to change the tool mount angle.

A turning process may be performed by controlling an angle around a pivot axis of the spindle head such that an angle (*β₁*) between the axis of the spindle and a vertical line is to be approximately identical to the tool mount angle (*β₂*).

The machine tool according to the present invention includes the means above, enabling the deep-cut internal turning process of workpieces whose portion to be bored is located at a depth deeper than the length of the attachment projected from the spindle head.

### Brief Description of the Drawings

FIG. 1 is a perspective view of a machine tool including an internal turning attachment according to the present invention.
FIG. 2 is a perspective view of an internal turning attachment mounted on a spindle head.
FIG. 3 is a diagram illustrating an operation of the internal turning attachment according to the present invention.
FIG. 4 is a diagram illustrating a structure for mounting the attachment to a spindle head.
FIG. 5 is a diagram illustrating a state where interference occurs.
FIG. 6 is a diagram illustrating a tool holder.
FIG. 7 is a diagram illustrating a tool holder.
FIG. 8 is a diagram illustrating an operation according to the present invention.
FIG. 9 is a diagram illustrating an operation according to the present invention.
FIG. 10 is a diagram illustrating another example of the tool holder.
FIG. 11 is a diagram illustrating an automatic replacing device for the tool holder.
FIG. 12 is a diagram illustrating a clamp mechanism for the tool holder.
FIG. 13 is a diagram illustrating an automatic angle changing mechanism for the tool holder.

### Modes for Carrying out the Invention

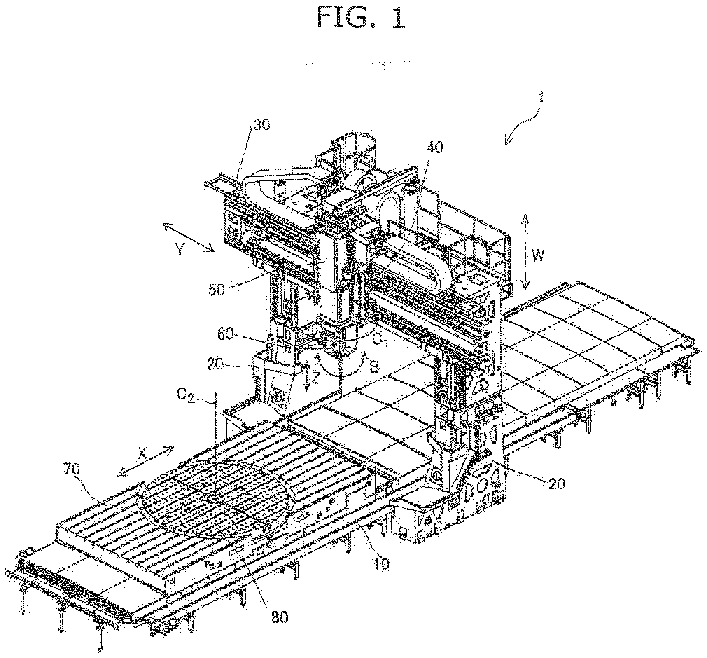

FIG. 1 is a perspective view of a general arrangement of a machine tool 1 including an internal turning attachment according to the present invention. The machine tool 1 includes a bed 10, and a portal column 20 disposed upright in a center portion of the bed 10 in the longitudinal direction of the bed 10. With respect to the columns 20, a cross rail 30 is disposed to be movable upward and downward in a direction of a vertical W-axis.

The cross rail 30 has a saddle 40 installed on the cross rail 30 to move on the cross rail 30 along a horizontal Y-axis. A ram 50 is installed on the saddle 40. The ram 50 is controlled to move relative to the cross rail 30 in a direction of a Z-axis parallel to the W-axis. A spindle head support portion 60 is installed to the ram 50 and is rotatably about a vertical C₁ axis.

A table 70 is disposed on the bed 10 to move on the bed 10 in an X-axial direction. A turning table 80 is embedded into the center portion of the table 70 rotatably about a C₂ axis, which is a rotation axis in the Z-axial direction.

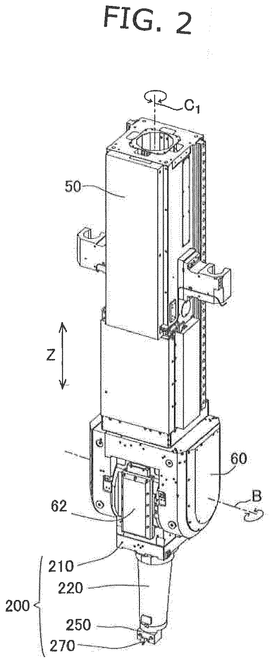

FIG. 2 is a perspective view of the ram 50 and the spindle head support portion 60. A spindle head 62 is provided to the spindle head support portion 60. The spindle head 62 is pivotable about a B-axis perpendicular to the Z-axis. A spindle is rotatably mounted in the spindle head 62.

An internal turning attachment 200 includes an attachment base 210, a body 220, and a tool holder 250.

The attachment base 210 in the internal turning attachment 200 is attached to and detached from the spindle head 62.

The body 220 is fixed to a lower portion of the attachment base 210. The bottom end surface of the body 220 is perpendicular to a spindle axis when the internal turning attachment 200 is mounted to the spindle head 62. The bottom end surface defines a surface for attaching the tool holder 250.

A turning tool 270 is mounted onto the tool holder 250.

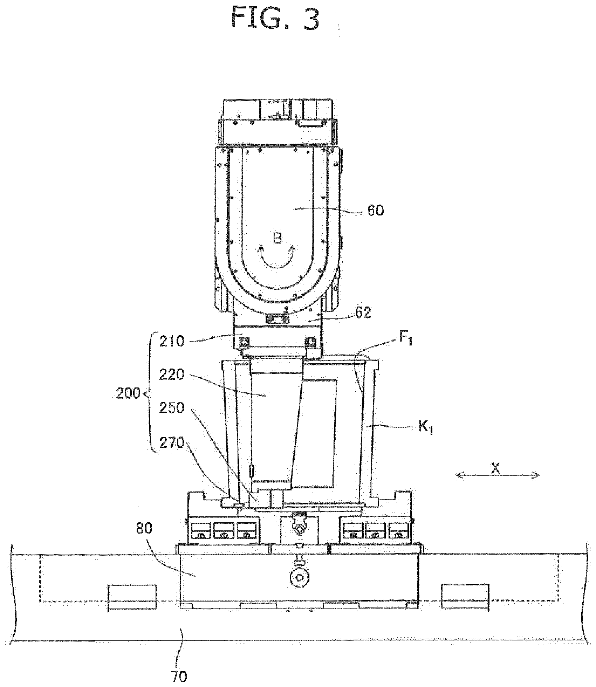

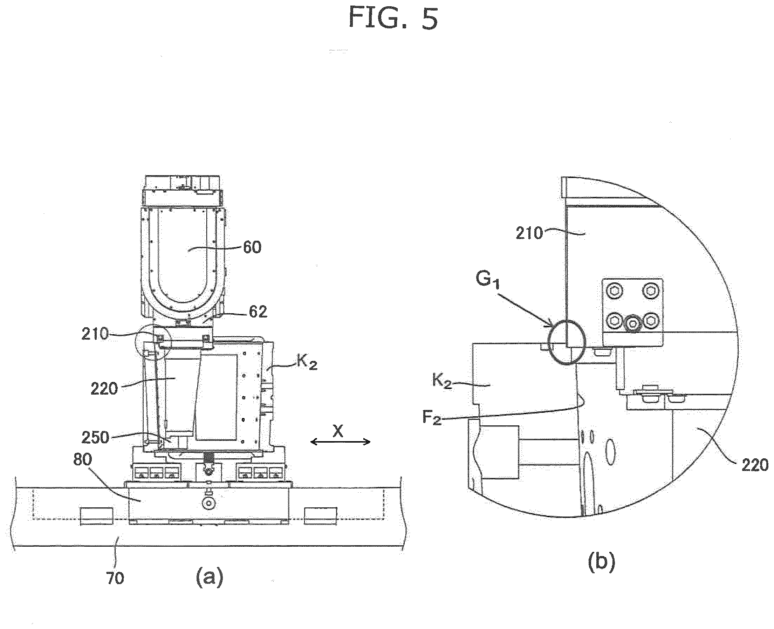

FIG. 3 is a diagram illustrating a state where a workpiece K₁ mounted to the turning table 80 is machined with the internal turning attachment 200 where the B-axis is 0°. FIG. 3 illustrates a cross section diagram of a workpiece K₁ which cross section is along a rotation center C₂ of the turning table 80 and is parallel to the X-axial direction for easily understanding of interference occurrence between the workpiece K₁ and the spindle head 62. The workpiece K₁ is shown in a similar manner in FIGs. 5, 8, and 9, described later.

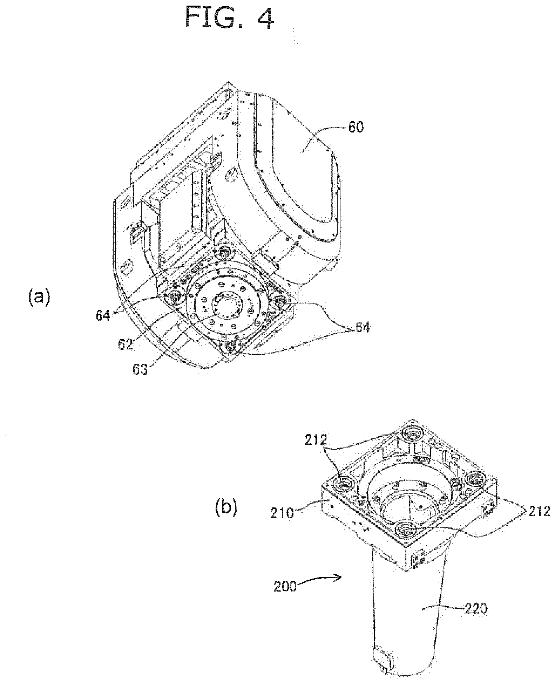

FIG. 4 is a diagram illustrating an example of a structure for detachably attaching the internal turning attachment 200 to the spindle head 62.

The spindle head 62 includes a spindle 63 in the center of the spindle head 62. A lower end surface of the spindle head 62 includes four grip portions 64.

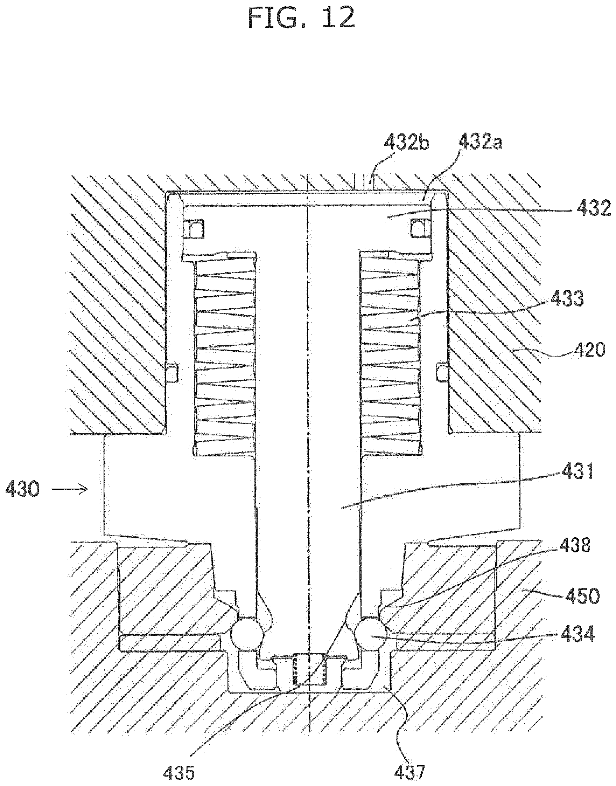

The attachment base 210 in the internal turning attachment 200 includes four grip holes 212 facing the respective grip portions 64 disposed in the spindle head 62. The grip portions 64 are inserted into the grip holes 212, and clamped such that the internal turning attachment 200 is mounted to the spindle head 62. The gripping mechanism is similar to the gripping mechanism shown in FIG. 12, described later.

FIG. 5 is a diagram illustrating a case where interference occurs between the internal turning attachment 200 and an inner portion F₂ of a workpiece K₂ during the process.

Specifically, when the spindle head 62 moves downward toward the inner portion F₂, an interference portion G₁ generates between the attachment base 210 in the internal turning attachment 200 and an entrance of the inner portion F₂.

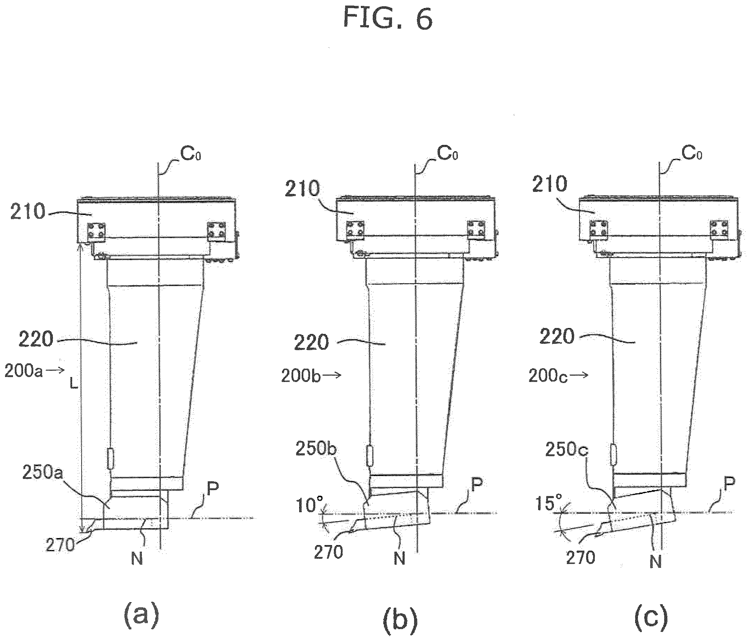

To avoid the interference, the internal turning attachment 200 according to the present invention includes a 0° tool holder 250a for an angle of 0° around the B-axis, a 10° tool holder 250b for an angle of 10° around the B-axis, and a 15° tool holder 250c for an angle of 15° around the B-axis, as shown in FIG. 6. The respective tool holders are set at angles of 0°, 10°, and 15°. These angles are angles between a tool mount surface N and a plane P perpendicular to the line C₀, with which the spindle axis is aligned, when the attachment is mounted to the spindle. The angle between the plane P and the tool mount surface N is referred to as a tool mount angle.

Hereinafter, the internal turning attachment 200 having the 0° tool holder 250a mounted to the internal turning attachment 200 is referred to as an internal turning attachment 200a, the internal turning attachment 200 having the 10° tool holder 250b mounted to the internal turning attachment 200 is referred to as an internal turning attachment 200b, and the internal turning attachment 200 having the 15° tool holder 250c mounted to the internal turning attachment 200 is referred to as an internal turning attachment 200c.

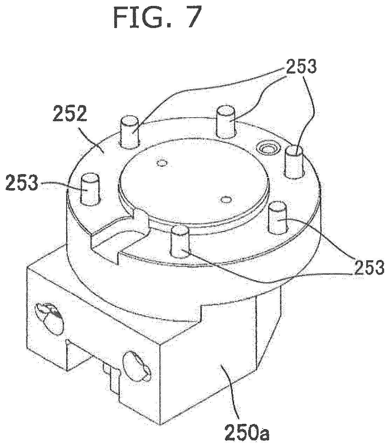

FIG. 7 is a view of a tool holder 250 for manual replacement, illustrating a structure of the tool holder 250 to be mounted to an attachment body 220 with a mount flange 252 of the tool holder 250 and six bolts 253.

When the same workpiece is continuously machined and the frequency of set-up is low, the tool holder for manually replacement also can sufficiently exhibit the effect at low cost.

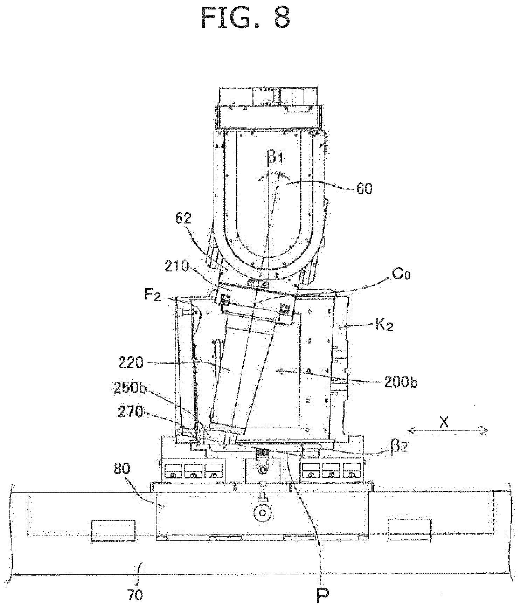

FIG. 8 is a diagram illustrating a state where the 10° tool holder 250b having the tool mount angle of 10° expressed by *β₂* is mounted to the body 220, and the spindle head 62 is 10° pivoted about the B-axis expressed by *β₁* and positioned.

The spindle head is pivoted and positioned about B-axis of the spindle head by an identical angle to the tool mount angle such that the blade tip of the turning tool mounted to the tool holder may contact the workpiece at a right angle.

In this state, the blade tip of the tool is brought into contact with the inner portion F₂ of the workpiece K₂ with the turning table 80 being rotated. This operation avoids the interference between the internal turning attachment 200b and the inner portion F₂, machining the workpiece without fail.

Specifically, when the portion to be bored is located at a depth deeper than a length L of the attachment projected from the spindle head and the angle of 0° is set about B-axis, the attachment base undesirably interferes with the workpiece. To avoid this interference, the position of the B-axis of the spindle head is slightly changed to dispose the spindle head spaced from the workpiece. This changed position of the B-axis also changes the angle between the tool and the workpiece. To correct the change in the angle, the tool mount angle is changed as above.

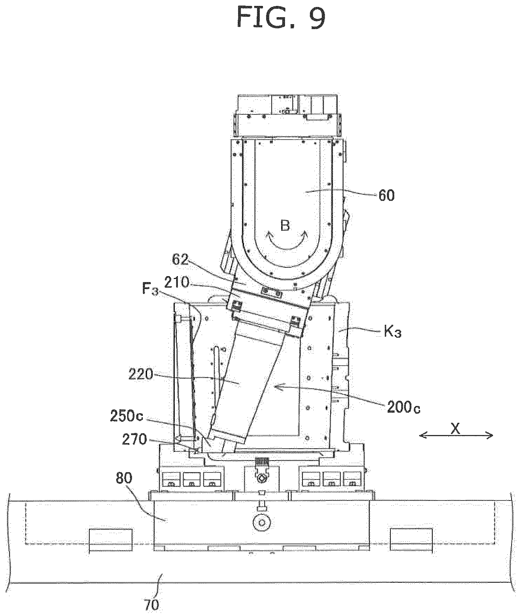

FIG. 9 is a diagram illustrating a state where the 15° tool holder 250c is mounted to the body 220, and the spindle head 62 is pivoted about the B-axis at 15° and clamped.

Thus, as the angle to pivot about the B-axis is greater, the distance between the spindle head and the workpiece is longer. Meanwhile, the spindle head side opposite to the blade tip may possibly interfere with the workpiece. However, as in this example, when the workpiece has a sufficiently large inner diameter, the inner portion of the workpiece is machined without interference between the workpiece K₃ and the spindle head side if the B-axis angle is further changed.

Thus, the tool mount angle is properly selected depending on the workpiece and the B-axis is positioned in accordance with the tool mount angle. Then, the workpiece is subjected to the internal turning process of the workpiece to bore a deep hole in the workpiece without sacrificing rigidity and producing interference.

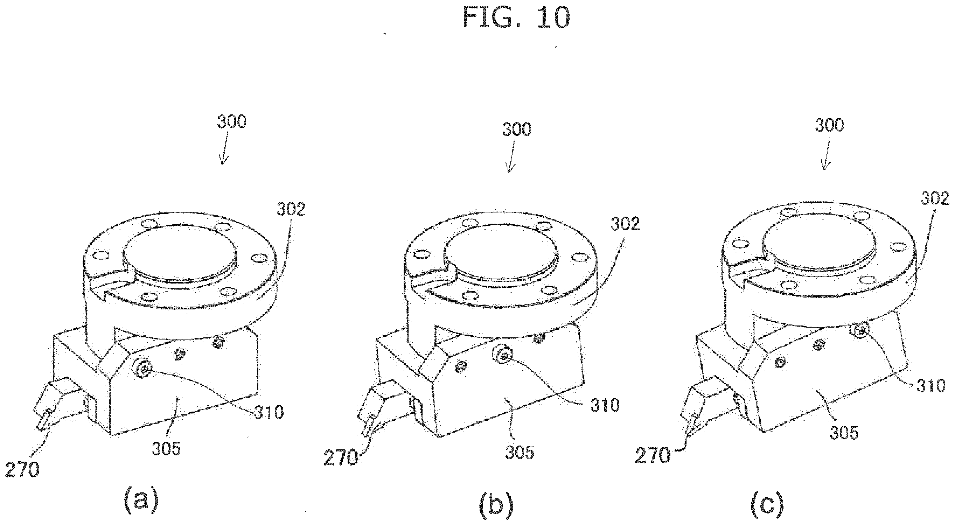

FIG. 10 is a diagram illustrating an example of a single tool holder 300, which is capable of adjusting the mount angle of the turning tool 270.

The turning tool 270 is fixed to a tool mounting member 305, and the tool mounting member 305 is mounted to the body mounting member 302 pivotably about a pin not shown. The tool mounting member 305 and the body mounting member 302 respectively include angle bolt holes and tapped holes to fix the tool mount angles of 0°, 10°, and 15°, respectively. A bolt 310 is screwed into the leftmost bolt hole in (a) in the diagram to fix the turning tool 270 at 0°, into the central bolt hole in (b) in the diagram to fix the turning tool 270 at 10°, and into the rightmost bolt hole in (c) in the diagram to fix the turning tool 270 at 15°.

The turning tool 270 may be designed such that the tool mount angle is changed to any angle.

The tool holder of this type is also effective when the frequency of set-up is lower. Additionally, the tool holder of this type may not necessarily be provided in plural, which is advantageous in cost.

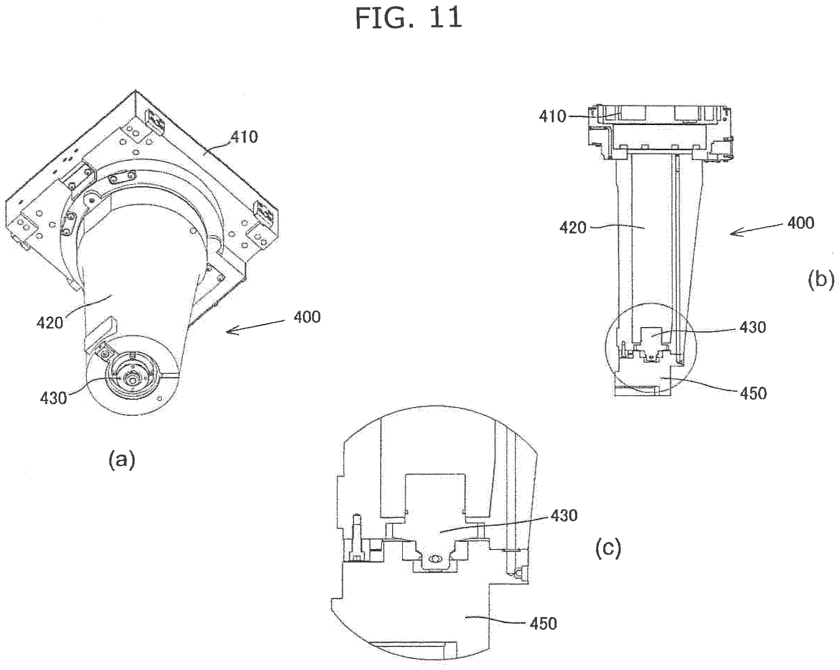

FIG. 11 is a diagram illustrating an example of the internal turning attachment having a structure enabling automatic replacement of the tool holders with respect to the attachment having different tool mount angles.

A tool holder automatic replacement type internal turning attachment 400 includes an attachment base 410 and a body 420 mounted to the attachment base 410. The distal end portion of the body 420 has a grip portion 430. The grip portion 430 is mechanically operated to automatically replace the tool holders 450 having different turning tool mount angles. Specifically, a tool holder storage is disposed within a spindle movable area. The tool holder storage includes a plurality of stands, and the respective tool holders are horizontally placed on the stands with the mount flange facing upward. After the tool holder automatic replacement type internal turning attachment 400 is placed on an empty stand and positioned, the grip portion 430 is unclamped to release the tool holder onto the stand. Then, the attachment 400 is positioned for another tool holder placed on another stand, and the grip portion 430 is clamped. Thus, the tool holder 450 is automatically replaced.

Thus, two or more tool holders having different tool mount angles are kept within the spindle movable area, and automatically replaced. This enables frequent set-up and the processing of different portions in the same workpiece with the attachments having different tool mount angles. When the workpiece is machined with the tool holder having a tool mount angle of 10° or 15° and with the angle about the B-axis set to be 10° or 15°, X-axial direction component of the length from an attachment support portion to the blade tip is slightly longer than that at an angle of 0° around the B-axis, causing disadvantages in rigidity. When chattering occurs, and if no interference occurs between the 0° tool holder and the workpiece, the 0° tool holder may be used to attain good process results.

FIG. 12 is a diagram illustrating a gripping mechanism for the grip portion 430 in detail.

The tool holder 450 includes a grip hole 437 having a protrusion portion 438.

The grip portion 430 includes a hydraulic chamber 432a having a drawbar 431 and a piston 432 integrated with the drawbar 431. Hydraulic pressure is applied to the hydraulic chamber 432a from the spindle side via a passage 432b. The tool holder 450 is pushed with the drawbar 431 to release the clamp, and a ball 434 is accommodated into a depression portion 435 such that the tool holder 450 is unclamped. When hydraulic pressure is not applied, a spring 433 moves the drawbar 431 in a direction to draw back the tool holder 450, and the ball 434 grasps the tool holder 450.

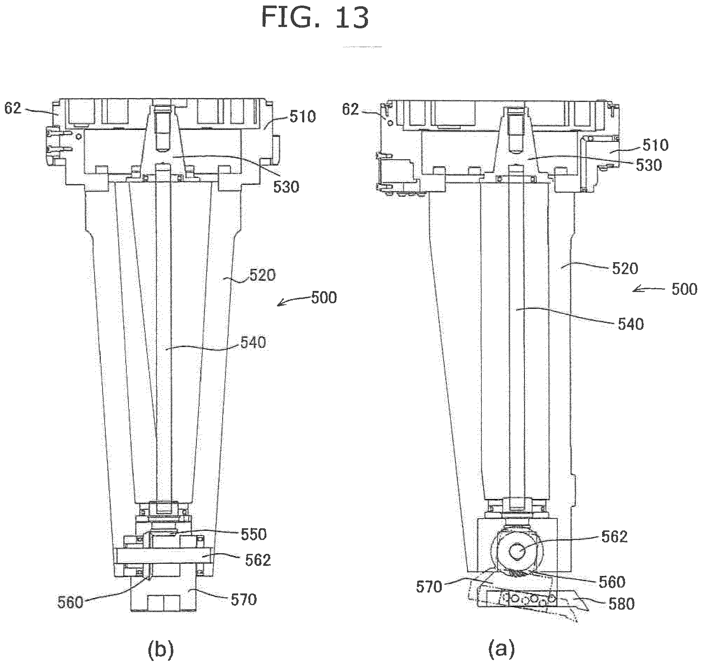

FIG. 13 is a diagram illustrating an example of the internal turning attachment having a structure in which a driving force of the spindle is utilized to automatically change the tool mount angle of the tool holder.

A tool holder rotating type internal turning attachment 500 includes an attachment base 510 to be mounted to the spindle head 62. The attachment base 510 includes a spindle shank 530 in the center portion of the attachment base 510, and is inserted into the spindle in the spindle head 62. The rotational force of the spindle shank 530 is transmitted via a drive shaft 540 to a bevel gear 550 disposed in the distal end portion of the body 520. Together with a tool holder 570, a support shaft 562 mounted to the body 520 supports a bevel gear 560 to mesh the bevel gear 560 with the bevel gear 550. Thus, the rotation of the bevel gear 550 is changed by 90°, and transmitted to the bevel gear 560. The rotation of the bevel gear 560 automatically changes the tool mount angle in the tool holder 570, which supports a turning tool 580.

As has been described hereinbefore, the tool mount angle is changed by the rotation of the spindle. The rotational angle of the spindle is controlled to set the mount angle at any angle. The tool mount angle is changed to any angle to avoid the interference between the workpiece and the attachment as occasion arises. Such a configuration increases the freedom of the program for the process. Additionally, chattering can be eliminated by adjusting the tool amount angle slightly.

The automatic change of the tool mount angle leads to improved process efficiency because the process conditions including the tool mount angle can be freely changed while one workpiece is being machined.

Thus, by controlling the B-axis of the spindle head in the machine tool, the internal turning attachment according to the present invention can deep cut an inner portion of a workpiece to be bored which is located at a depth deeper than the length of the attachment projected from the spindle head.

### Description of the Reference Numeral

- 1: Machine tool
- 10: Bed
- 20: Column
- 30: Cross rail
- 40: Saddle
- 50: Ram
- 60: Spindle head support portion
- 62: Spindle head
- 63: Spindle
- 64: Grip portion
- 70: Table
- 80: Rotary table
- 200: Internal turning attachment
- 210: Attachment base
- 212: Grip hole
- 220: Body
- 250: Tool holder
- 250a: 0° tool holder
- 250b: 10° tool holder
- 250c: 15° tool holder
- 252: Mount flange
- 253: Bolt
- 270: Turning tool
- 300: Tool holder
- 302: Body mounting member
- 305: Tool mounting member
- 310: Bolt
- 400: Tool holder automatic replacement type internal turning attachment
- 410: Attachment base
- 420: Body
- 430: Grip portion
- 431: Drawbar
- 432: Piston
- 432a: Hydraulic chamber
- 432b: Passage
- 433: Spring
- 434: Ball
- 435: Depression portion
- 437: Grip hole
- 438: Protrusion portion
- 450: Tool holder
- 500: Tool holder rotating type internal turning attachment
- 510: Attachment base
- 520: Body
- 530: Spindle shank
- 540: Drive shaft
- 550: Bevel gear
- 560: Bevel gear
- 562: Support shaft
- 570: Tool holder
- 580: Turning tool
- K₁: Workpiece
- F₁: Inner portion
- G₁: Interference portion

## Claims

1. A machine tool (1) comprising:
a table (80) configured to turn about a vertical axis (C₂) with a workpiece mounted on the table (80);
a spindle head (62) disposed above the table (80) and pivotable about a B-axis, the B-axis is a horizontal axis;
a spindle (63) built in the spindle head (62) and configured to rotate about an axis of a tool detachably mounted to the spindle (63); and
an internal turning attachment (200) detachably mounted to the spindle head (62) with a dedicated clamp mechanism (64, 212),
wherein the internal turning attachment (200) comprises
an attachment base (210) having a portion to be mounted to the spindle head (62),
a body (220) fixed to a lower portion of the attachment base (210), and
a tool holder (250) to be mounted to a lower portion of the body (220),
wherein the tool holder (250) has a tool mount surface (N) to which a turning tool (270) is detachably mounted,
wherein a tool mount angle (*β2*) is an angle between the tool mount surface (N) and a plane (P) perpendicular to an axis (C₀) of the spindle (63) as the internal turning attachment (200) is mounted to the spindle head (62),
**characterized in that**
the tool mount angle (*β2*) is changeable, for a workpiece which has a hole with a depth deeper than a length of the internal turning attachment (200) projected from the spindle head (62), the machine tool (1) is configured to change the tool mount angle (*β2*) larger than zero degree and to change an angle of the spindle head (62) about the B-axis to other than zero degree, and is configured to machine the workpiece at the changed tool mount angle (*β₂)*, and
the machine tool (1) is configured to fix the changed tool mount angle (*β2*) while the turning tool (270) is in contact with the workpiece.

2. The machine tool (1) according to claim 1, the machine tool (1) further comprising
a plurality of tool holders (250) mounted at different tool mount angles (*β2*), wherein
the tool holder (250) is replaceable with another tool holder among the plurality of tool holders (250) to change the tool mount angle (*β₂*).

3. The machine tool (1) according to claim 1 or 2, wherein the machine tool (1) is configured to perform a turning process by determining an angle for the spindle head (62) about a pivot axis (B) such that an angle (*β₁*) between the axis of the spindle (63) and a vertical line is to be approximately identical to the tool mount angle (*β₂*).

## Patentansprüche

1. Werkzeugmaschine (1), die Folgendes aufweist:
einen Tisch (80), der gestaltet ist, um sich um eine senkrechte Achse (C₂) mit einem Werkstück zu drehen, das auf dem Tisch (80) montiert ist;
einen Spindelkopf (62), der oberhalb des Tisches (80) angeordnet ist und um eine B-Achse schwenkbar ist, wobei die B-Achse eine waagrechte Achse ist;
eine Spindel (63), die in den Spindelkopf (62) eingebaut ist und gestaltet ist, um sich um eine Achse eines Werkzeugs, das abnehmbar an der Spindel (63) montiert ist, zu drehen; und
eine interne Drehanbringungseinheit (200), die abnehmbar an dem Spindelkopf (62) mit einem zugehörigen Halterungsmechanismus (64, 212) montiert ist,
wobei die interne Drehanbringungseinheit (200) Folgendes aufweist:
eine Anbringungsbasis (210) mit einem Abschnitt, der an dem Spindelkopf (62) zu montieren ist,
einen Körper (220), der an einem unteren Abschnitt der Anbringungsbasis (210) befestigt ist, und
einen Werkzeughalter (250), der an einem unteren Abschnitt des Körpers (220) zu montieren ist,
wobei der Werkzeughalter (250) eine Werkzeugmontagefläche (N) hat, an die ein Drehwerkzeug (270) abnehmbar montiert ist,
wobei ein Werkzeugmontagewinkel (β₂) ein Winkel zwischen der Werkzeugmontagefläche (N) und einer Ebene (P) ist, die senkrecht zu einer Achse (Co) der Spindel (63) ist, wenn die interne Drehanbringungseinheit (200) an dem Spindelkopf (62) montiert ist,
**dadurch gekennzeichnet, dass**
der Werkzeugmontagewinkel (β₂) änderbar ist,
für ein Werkstück, das ein Loch mit einer Tiefe hat, die tiefer ist als eine Länge der internen Drehanbringungseinheit (200), die von dem Spindelkopf (62) vorsteht, die Werkzeugmaschine (1) gestaltet ist, um den Werkzeugmontagewinkel (β₂) auf einen Winkel, der größer als 0° ist, zu ändern und um einen Winkel des Spindelkopfs (62) um die B-Achse auf einen Winkel, der anders als 0° ist, zu ändern, und gestaltet ist, um das Werkstück in dem geänderten Werkzeugmontagewinkel (β₂) zu bearbeiten, und
die Werkzeugmaschine (1) gestaltet ist, um den geänderten Werkzeugmontagewinkel (β₂) zu fixieren, während das Drehwerkzeug (270) mit dem Werkstück in Kontakt ist.

2. Werkzeugmaschine (1) nach Anspruch 1, wobei die Werkzeugmaschine (1) des Weiteren Folgendes aufweist:
eine Vielzahl von Werkzeughaltern (250), die in verschiedenen Werkzeugmontagewinkeln (β₂) montiert sind, wobei
der Werkzeughalter (250) durch einen anderen Werkzeughalter aus der Vielzahl von Werkzeughaltern (250) austauschbar ist, um den Werkzeugmontagewinkel (β₂) zu ändern.

3. Werkzeugmaschine (1) nach Anspruch 1 oder 2, wobei die Werkzeugmaschine (1) gestaltet ist, um einen Drehprozess durch Bestimmen eines Winkels für den Spindelkopf (62) um eine Schwenkachse (B) derart auszuführen, dass ein Winkel (β₁) zwischen der Achse der Spindel (63) und einer senkrechten Linie ungefähr gleich zu dem Werkzeugmontagewinkel (β₂) ist.

## Revendications

1. Machine-outil (1) comprenant :
une table (80) configurée pour tourner autour d'un axe vertical (C₂) avec une pièce montée sur la table (80) ;
une tête de broche (62) disposée au-dessus de la table (80) et pouvant pivoter autour d'un axe B, l'axe B est un axe horizontal ;
une broche (63) construite dans la tête de broche (62) et configurée pour tourner autour d'un axe d'un outil monté de manière détachable sur la broche (63) ; et
une fixation de rotation interne (200) montée de manière détachable sur la tête de broche (62) avec un mécanisme de serrage dédié (64, 212),
dans laquelle la fixation de rotation interne (200) comprend :
une base de fixation (210) ayant une partie destinée à être montée sur la tête de broche (62),
un corps (220) fixé à une partie inférieure de la base de fixation (210), et
un porte-outil (250) destiné à être monté sur une partie inférieure du corps (220),
dans laquelle le porte-outil (250) a une surface de montage d'outil (N) sur laquelle un outil rotatif (270) est monté de manière détachable,
dans laquelle l'angle de montage d'outil (ß₂) est un angle entre la surface de montage d'outil (N) et un plan (P) perpendiculaire à un axe (C₀) de la broche (63) lorsque la fixation de rotation interne (200) est montée sur la tête de broche (62),
**caractérisée en ce que** :
l'angle de montage d'outil (ß₂) est modifiable pour une pièce qui a un trou avec une profondeur plus profonde qu'une longueur de la fixation de rotation interne (200) en saillie par rapport à la tête de broche (62), la machine-outil (1) est configurée pour modifier l'angle de montage d'outil (ß₂) supérieur à zéro degré et pour modifier un angle de la tête de broche (62) autour de l'axe B à un autre angle différent de zéro degré, et est configurée pour usiner la pièce à l'angle de montage d'outil (ß₂) modifié, et
la machine-outil (1) est configurée pour fixer un angle de montage d'outil (ß₂) modifié alors que l'outil de rotation (270) est en contact avec la pièce.

2. Machine-outil (1) selon la revendication 1, la machine-outil (1) comprenant en outre :
une pluralité de porte-outils (250) montés à différents angles de montage d'outil (ß₂) dans laquelle :
le porte-outil (250) peut être remplacé par un autre porte-outil parmi la pluralité de porte-outils (250) afin de modifier l'angle de montage d'outil (ß₂).

3. Machine-outil (1) selon la revendication 1 ou 2, dans laquelle la machine-outil (1) est configurée pour réaliser un processus de rotation en déterminant un angle pour la tête de broche (62) autour d'un axe de pivot (B) de sorte qu'un angle (ß₁) entre l'axe de la broche (63) et une ligne verticale doit être approximativement identique à l'angle de montage d'outil (ß₂).
